# EUROPEAN PATENT APPLICATION

(11) **EP 3 373 044 A1**
(43) Date of publication of application: **12.09.2018**
(21) Application number: 18305238.0
(22) Date of filing: 07.03.2018
(51) Int. Cl.: G01V 1/38

(54) **SYSTEM AND METHOD FOR GENERATING AND ACQUIRING SEISMIC DATA WITH FLOTILLAS OF SEISMIC SOURCES AND RECEIVERS**

(30) Priority: 10.03.2017 US 201715455366
(71) Applicant: CGG Services SAS, 91300 Massy (FR)
(72) Inventor: LANDAIS, Mickael, 91300 MASSY (FR); DANIEL, Pierrick, 91300 MASSY (FR)
(74) Representative: Petit, Maxime

(57) **Abstract**

A seismic acquisition system (300) including a source flotilla (310) that includes a first source (312) and a second source (314) for generating seismic waves and a receiver flotilla (340) that includes a first receiver (342) and a second receiver (344) for recording reflected seismic waves. The first source (312) moves independent of the second source (314), the first receiver (342) moves independent of the second receiver (344), and the first source (312) and the second source (314) move independent of the first receiver (342) and the second receiver (344).

## Description

### BACKGROUND

### TECHNICAL FIELD

Embodiments of the subject matter disclosed herein generally relate to methods and systems related to seismic exploration and, more particularly, to mechanisms and techniques for generating seismic waves with a flotilla of independent seismic sources and recording reflected seismic waves with a flotilla of independent receivers.

### DISCUSSION OF THE BACKGROUND

Marine seismic data acquisition and processing generate a profile (image) of a geophysical structure under the seafloor. This image is generated based on recorded seismic data. The recorded seismic data includes pressure and/or particle motion related data associated with the propagation of a seismic wave through the earth. While this profile does not provide an accurate location of oil and gas reservoirs, it suggests, to those trained in the field, the presence or absence of these reservoirs. Thus, providing a high-resolution image of geophysical structures under the seafloor is an ongoing process. The image illustrates various layers that form the surveyed subsurface of the earth.

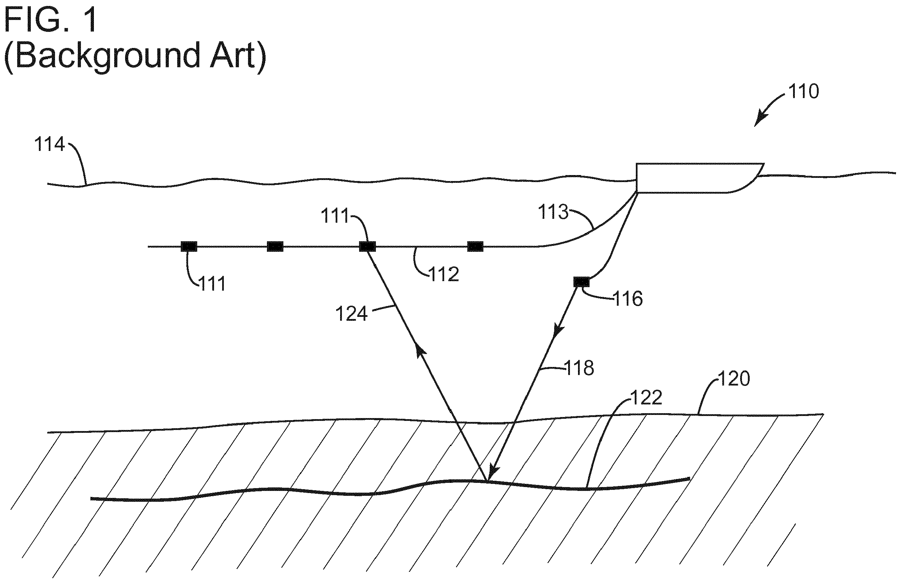

During a seismic gathering process, as shown in Figure 1, a vessel 110 tows an array of seismic receivers 111 provided on streamers 112. The streamers may be disposed horizontally, i.e., lying at a constant depth relative to the ocean surface 114, or may have spatial arrangements other than horizontal, e.g., variable-depth arrangement. Vessel 110 also tows a seismic source array 116 configured to generate seismic waves 118 (only one is shown for simplicity). The seismic wave 118 propagates downward, toward the seafloor 120, and penetrates the seafloor until, eventually, a reflecting structure 122 (reflector) reflects the seismic wave. The reflected seismic wave 124 propagates upward until it is detected by receiver 111 on streamer 112. Based on this recorded seismic data, an image of the subsurface is generated.

In an effort to improve the resolution of the subsurface's image, an innovative solution (BroadSeis system of CGG, France) has been implemented based on broadband seismic data. The BroadSeis system may use Sentinel streamers (produced by Sercel, France) with low noise characteristics and the ability to deploy the streamers in configurations allowing the recording of an extra octave or more of low frequencies. The streamers are designed to record seismic data while being towed at greater depths and are quieter than other streamers. Thus, the receivers of these streamers are best used with a marine broadband source array.

A marine broadband source array may include one or more sub-arrays (usually three sub-arrays), and each sub-array may include plural source elements (e.g., an air gun or a cluster, association of several air guns, etc.) provided along an inline direction. This source array has better characteristics than existing source arrays and it is disclosed in U.S Patent No. 9,075,166, assigned to the same assignee as the present application, the entire disclosure of which is incorporated herein by reference.

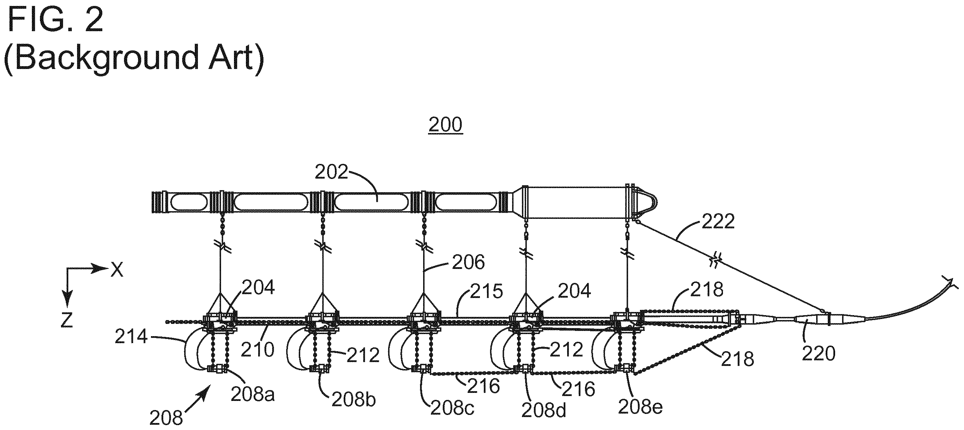

Figure 2 shows in more detail a sub-array 200 of such source array. Sub-array 200 includes a float 202 from which multiple plates 204 are suspended at a given depth. Float 202 has a body that extends along a longitudinal axis (X). Cables 206 may be used to suspend the plates 204 from the float 202. Plural source elements 208a to 208e form the given depth sub-array set 208. All these source elements are suspended from the same float 202 via links 212 that substantially extend along a vertical axis (Z). Link 212 may include a chain, a rope and/or a cable. Each source element may have its own cables 214 (electrical, compressed air, data, etc.) for receiving commands or power (note that these cables are not shown for all the sources). The cables are protected by a rigid housing 215. Strength members 210 may be located between the plates 204 for maintaining the source's integrity when towed underwater.

Some of the source elements may optionally be connected to each other by various means 216, e.g., rods, chains, cables, etc. A front portion of the plate 204 corresponding to the first source element 208e (an air gun in this figure) may also be connected via a connection 218 to an umbilical 220 that may be connected to the vessel (not shown). Optionally, a link 222 may connect the float 202 to the umbilical 220. In one application, three or more such floats 202 and corresponding source elements may form the source array.

As seen from this description, the traditional source arrays are bulky, heavy, difficult to control and not flexible, i.e., the various source elements that make up the source array cannot move independent of the others. Note that the marine vibratory sources, in general, are much larger than impulsive sources like airguns because for the same size (by weight or volume), the vibratory sources emit much less energy. This fact further complicates the ability to tow, move and handle the vibratory sources in towed subarrays. Further, the streamers are long devices (e.g., up to 20 km long) that require a large amount of power for being towed, are difficult to be positioned along a desired path, and are expensive to be maintained.

In addition, conventional marine seismic surveys are conducted by large seismic vessels towing long streamers equipped with hydrophone receivers. In many cases, these large seismic vessels also tow the source arrays. In some cases, additional seismic source vessels are utilized to tow additional seismic sources, either to improve overall efficiency or to collect data sets at longer offsets. Deployment, retrieval and towing of marine sources and streamers present significant challenges. Further, towing the source elements and the receivers with a fixed geometry also limits the ways the seismic data can be collected.

Therefore, there is a need for economically conducting a marine seismic survey using a flexible seismic source system and a flexible system of receivers that can be configured to meet different geophysical and operational objectives. Thus, it is desired to produce a flexible, reconfigurable source and receiver arrangement that overcomes the above discussed problems.

### SUMMARY

According to an embodiment, there is a seismic acquisition system that includes a source flotilla that includes a first source and a second source for generating seismic waves and a receiver flotilla that includes a first receiver and a second receiver for recording reflected seismic waves. The first source moves independent of the second source, the first receiver moves independent of the second receiver, and the first source and the second source move independent of the first receiver and the second receiver.

According to another embodiment, there is a method for seismic data acquisition. The method includes driving a source flotilla, that includes a first source and a second source, along an inline direction for generating seismic waves and recording reflected seismic waves with a receiver flotilla that includes a first receiver and a second receiver. The first source moves independent of the second source, the first receiver moves independent of the second receiver, and the first source and the second source move independent of the first receiver and the second receiver.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 is a schematic diagram of a conventional marine seismic survey system;
Figure 2 is a schematic diagram of a traditional seismic survey source sub-array having all the source elements connected to a single float;
Figure 3 illustrates a seismic acquisition system that includes a source flotilla for generating seismic waves and a receiver flotilla that records reflected seismic waves;
Figures 4A-4C illustrate a seismic acquisition system having two different kinds of sources;
Figure 5A illustrates the arrangement of the receiver flotilla relative to the source flotilla and Figure 5B schematically illustrates two seismic data sets that are recorded with this system;
Figure 6 illustrates how the source flotilla advances along the traveling path and also the position of the receiver flotilla relative to the source flotilla;
Figure 7 illustrates how the receiver flotilla drifts while the source flotilla generates seismic waves;
Figure 8 illustrates an arrangement in which plural receiver flotillas and plural source flotillas are used for generating and collecting the seismic data;
Figure 9 illustrates an arrangement in which the receivers in the receiver flotilla are arranged with different densities and/or depths;
Figure 10 is a flowchart of a method for collecting seismic data with a source flotilla and a receiver flotilla; and
Figure 11 is a schematic diagram of a controller.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of a seismic acquisition data system that includes (i) two source vessels that tow dual band marine vibrators and (ii) an array of autonomous underwater vehicles (AUVs). However, the embodiments to be discussed next are not limited to two source vessels or to dual band marine vibrators or to AUVs.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

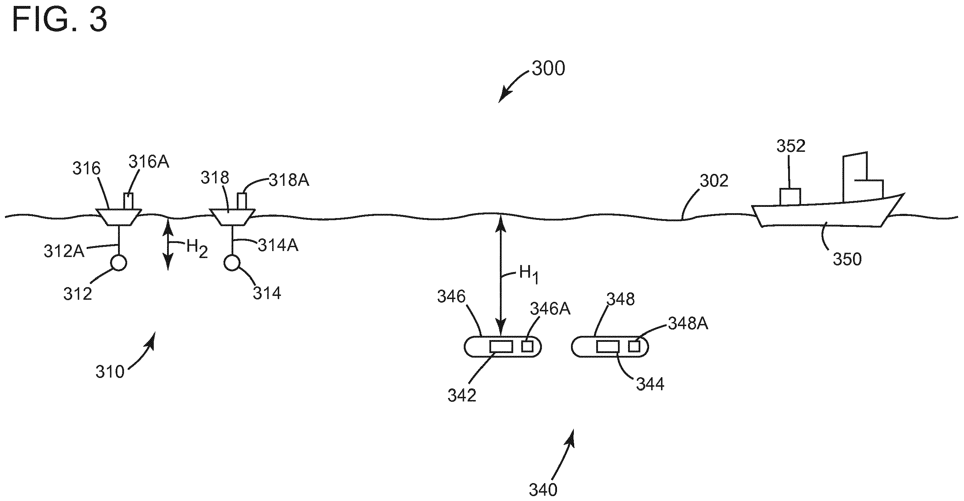

According to an embodiment, a marine seismic data acquisition system 300 includes a source flotilla 310 of seismic sources and a receiver flotilla 340 of seismic receivers, as illustrated in Figure 3. The source flotilla 310 includes at least two sources 312 and 314 that may be physically connected to corresponding source carriers 316 and 318. In one application, source carriers 316 and 318 are source vessels that tow the sources. This means that the source carriers have their own propulsion and they can tow the sources along desired paths. In another application, the source carriers are buoys with no propulsion system. In this case, the sources drift with the ocean currents. In still another application, the source carriers are barges from which the sources are hanging a certain depths.

Sources 312 and 314 may be vibratory sources or impulsive sources or a combination of both. A vibratory source is described in U.S. Patent 8,837,259 (which is incorporated herein by reference), which is assigned to the assignee of this application. The vibratory sources can be designed to generate low-frequency (LF) waves (e.g., in the range of 2 to 32 Hz) or high-frequency (HF) ranges (e.g., in the range of 30 to 200 Hz). Depending on the generated frequencies, the size and structure of these vibratory sources may be different. Thus, in the following, these sources are referred to as LF sources and HF sources. A source is understood herein to include one or more source elements. A source element is a basic unit that can generate a seismic wave. For example, Figure 2 discussed above shows a source 200 that include a plurality of source elements 208a-e.

Returning to Figure 3, sources 312 and 314 are shown being connected with corresponding umbilicals 312A and 314A to the source carriers 316 and 318. Umbilicals 312A and 314A are configured to transmit power, data and/or compressed air between the source and the source carriers. For example, if the source is an impulsive source, e.g., an air gun, then a compressor (not shown) is located on the source carrier and supplies compressed air to the air gun for generating the seismic waves. If the source is a vibratory source activated by an electromagnetic actuator, then a power generator (not shown) is located on the source carrier for supplying the necessary power to the source.

In one embodiment, the first source 312 is an LF marine vibrator and the second source 314 is a HF marine vibrator. The frequency ranges of the two sources may overlap or not. The combination of LF and HF sources make a dual-band source flotilla. As noted above, the source flotilla 310 may include more LF or HF or LF and HF sources.

The receiver flotilla 340 includes at least two receivers 342 and 344 carried by corresponding receiver carriers 346 and 348. Receivers 342 and 344 may include one or more of hydrophones, accelerometers, geophones, optical fibers, etc. Receivers 342 and 344 are located on corresponding receiver carriers 346 and 348. A receiver carrier may be an AUV, a glider with no propulsion system, a buoy that can only move up and down (i.e., having no propulsion system), etc. Although Figure 3 shows only two receivers and two receiver carriers, the receiver flotilla is expected to have tens or hundreds or thousands of such elements. Receivers 342 and 344 may be located at a given first depth H1 below the water surface 302 while the sources 312 and 314 may be located at a given second depth H2 below the water surface. In one application, H1 is different from H2. In another application, the depths of the sources vary from one source to another source. In still another application, the depths of the receivers vary from one receiver to another receiver. For example, the receivers may be arranged along a given horizontal straight line to have a changing depth to obtain a curved profile (in a vertical plane), similar to the Broadseis streamer arrangement used by CGG. The same may be applied to the sources.

Acquisition system 300 may also include a control and command vessel 350 that floats at the water surface and provides various support functions to the receivers and/or sources. For example, vessel 350 may have capabilities for retrieving the receiver carriers from water, for transferring the recorded seismic data on board, recharging the batteries of the receiver carriers, if they are using batteries for propulsion, performing other maintenance functions, and then releasing the receiver carriers back into the water. Vessel 350 may also include a global controller 352 for coordinating the movement of the receiver carriers and/or the movement of the source carriers during the seismic survey. In one application, vessel 350 may collect the receiver carriers at one location and deploy them at a different location. Communication between the global controller 352 and local controllers 316A and 318A located on the vessels, and/or local controllers 346A and 348A located at the receiver carriers, may be achieved by using acoustic signals when the receivers carriers are underwater and/or radio frequency when the receiver or source carriers are at the surface.

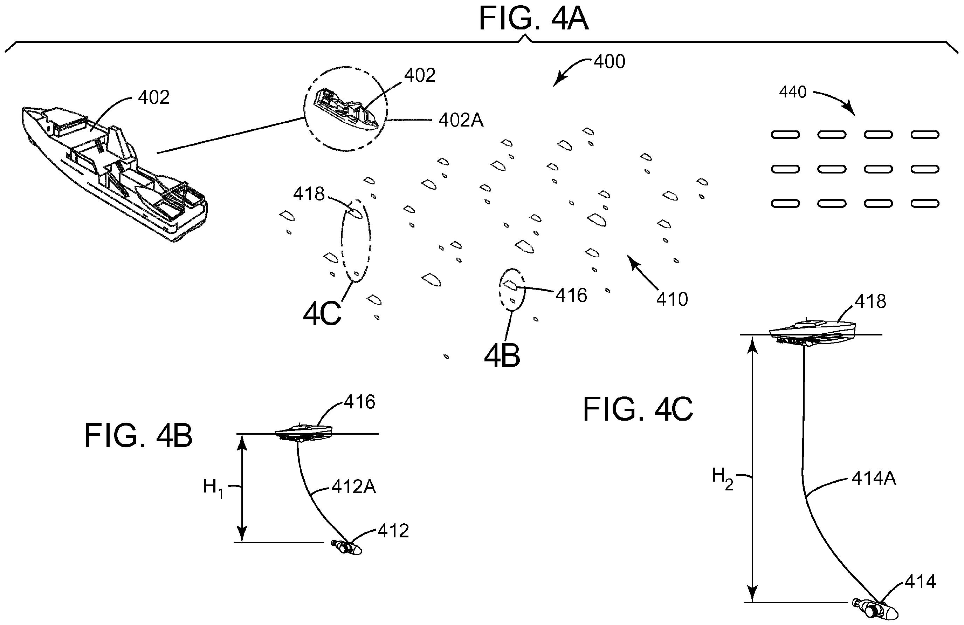

According to another embodiment, a seismic acquisition system 400 (or seismic source system) includes a command and control vessel (CCV) 402, a source flotilla 410 and a receiver flotilla 440, as illustrated in Figure 4A. The source flotilla 410 includes at least two unmanned source vessels (USVs), a first USV 416 that is mechanically connected to a corresponding LF source 412 as illustrated in Figure 4B, and a second USV 418 that is mechanically connected to a corresponding HF source 414, as illustrated in Figure 4C. Corresponding umbilicals 412A and 414A ensure the connection between the USVs and sources. The umbilicals may include a communication cable (coaxial, wire, or fiber optic). The umbilicals may also contain wires for power, pneumatic and/or hydraulic lines and include a strength member (for example, wire rope or Kevlar). The depths of the two sources 412 and 414 are H1 and H2, respectively.

Those skilled in the art would understand that the seismic waves generation system 400 may include only LF elements, only HF elements, a mixture of LF and HF elements, or sources that generate both LF and HF frequencies. For illustrative purposes, the figures herein show an LF source element and a HF source element. However, the seismic source system may include two or more USV vessels having identical source elements.

An USV is loosely coupled to at least one seismic source element (i.e., acoustic projector or air gun) through umbilical 412A or 414A. In an embodiment, source carrier 412 and/or 414 is capable of self-propulsion. In an embodiment, the seismic source element is a marine vibrator, for example, a twin-driver as disclosed in U.S. Patent No. 8,830,794.

The size of the USV vessel may vary as the source element is an LF or HF element. For example, an HF element is smaller than a LF element, and thus, in one application, USV vessel 416 may be about 6 m long while USV vessel 418 may be about 9 m long. For comparison reasons, CCV vessel 402 may be about 40 m long. CCV vessel may transport one or more USVs or source elements on its deck. Other sizes for the CCV and USV vessels may be used.

One reason for using two or more types of source elements, for example, an LF vibrator and a HF vibrator, is the efficiency of the overall system. The LF may be capable of generating signals in the range of about 2-45 Hz efficiently, while the HF may be capable of covering the frequency range of about 25-125 Hz. Other frequency ranges are possible. To further improve efficiency, the LF and HF may be operated at different depths, for example about 25 m and about 5 m, respectively, to avoid the destructive interference of the echo from the sea surface, or, in one application, to take advantage of the constructive interference with the echo from the sea surface. Figure 4C shows the LF source 414 linked to USV 418 and located at a depth H2 of about 25 m. Figure 4B shows HF source element 412 linked to USV 416 and located at a depth H1 of about 5 m.

Figure 4A shows that each USV of the source flotilla 410 is linked to a corresponding source element (LF and/or HF vibrator in this embodiment) and each USV is in communication with CCV vessel 402. Although the following embodiments are discussed with regard to marine vibrators being the sources, the invention is not limited to this type of source. For example, impulse sources like air guns or water guns are also possible. Also, in the description below, the term "sweep" used to describe the actuation of the source, is defined as the acoustic signal emitted by the marine vibrator. A sweep can be a swept sine wave (linear or nonlinear), a phase encoded swept sine wave, a pseudorandom signal, a discrete frequency emission, an arbitrary waveform, or a combination of signals not limited to a series of encoded concatenated swept sine waves. Also, more than one sweep may be executed by a source at a given shotpoint location (or in proximity to a shotpoint location including sweeping while moving between shotpoint locations) for noise reduction and/or stacking (for example, vertical stacking or diversity stacking) as records from repeated sweeps at a particular location can be used to reduce noise. A shotpoint location references the coordinates of a point or center point where a source or array of sources sweeps. If the source is moving during a sweep, then the shotpoint location includes the coordinates corresponding to the center point of the source path during its sweep. The USV vessels are unmanned in this embodiment. This means that the USV vessels are controlled by their local controllers. The local controllers may communication with the support vessel 402 and a global controller on the support vessel 402 may coordinate the movement of the sources, their shooting sequence, and when to turn.

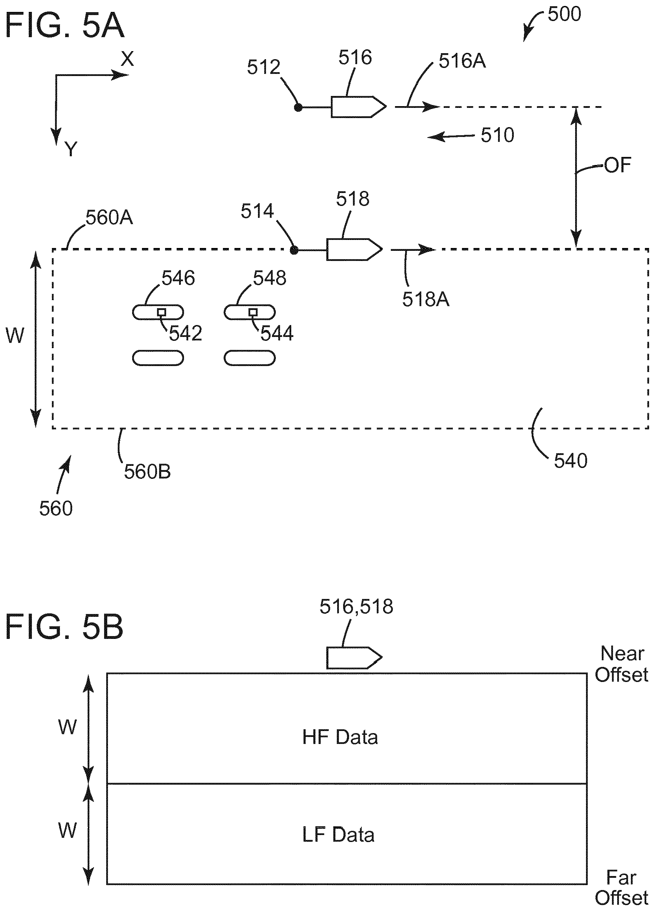

Figure 5A illustrates a practical implementation of the source flotilla and receiver flotilla for collecting seismic data. Acquisition system 500 includes the source flotilla 510 and the receiver flotilla 540. Source flotilla 510 includes a LF source 512 towed by a vessel 516 along a traveling path 516A and an HF source 514 towed by a vessel 518 along a traveling path 518A. Traveling paths 516A and 518A are substantially parallel to an inline direction X and are separated by an offset distance OF along a cross-line direction Y. Receiver flotilla 540 includes plural AUVs 546 and 548, each AUV including at least one seismic sensor 542 and 544, respectively. The AUVs may be located along parallel lines (rows), that are substantially parallel to the inline direction X. The AUVs may be arranged to cover a rectangular area 560.

In one embodiment, the HF source 514 and corresponding vessel 518 advance along a side 560A of rectangle 560, as illustrated in Figure 5A. A width W of the rectangle 560 may be equal to the offset distance OF between the two sources 512 and 514. While the offset distance OF may be smaller or larger then width W, the preferred arrangement is when OF = W. In one embodiment, the size of the width W is about 4 km. However, the value of W and OF may be between 100 and 20 km.

For the arrangement illustrated in Figure 5A, two sets of data are generated, one with high frequencies for short offsets due to the HF source 514 and one with low frequencies for long offsets due to the LF source 512. Because of the specific arrangement of Figure 5A, the collected data, which is graphically illustrated in Figure 5B, covers an offset range reaching twice the width W of the area 560 in which the receiver flotilla is confined. Figure 5B schematically illustrates the two sets of data, and the near and far offsets, with the offsets being measured relative to the vessels. Note that vessels 516 and 518 in Figure 5B are not meant to indicate their actual positions during the seismic survey, but only their locations relative to the two sets of data. The sources can shoot simultaneously during the seismic survey.

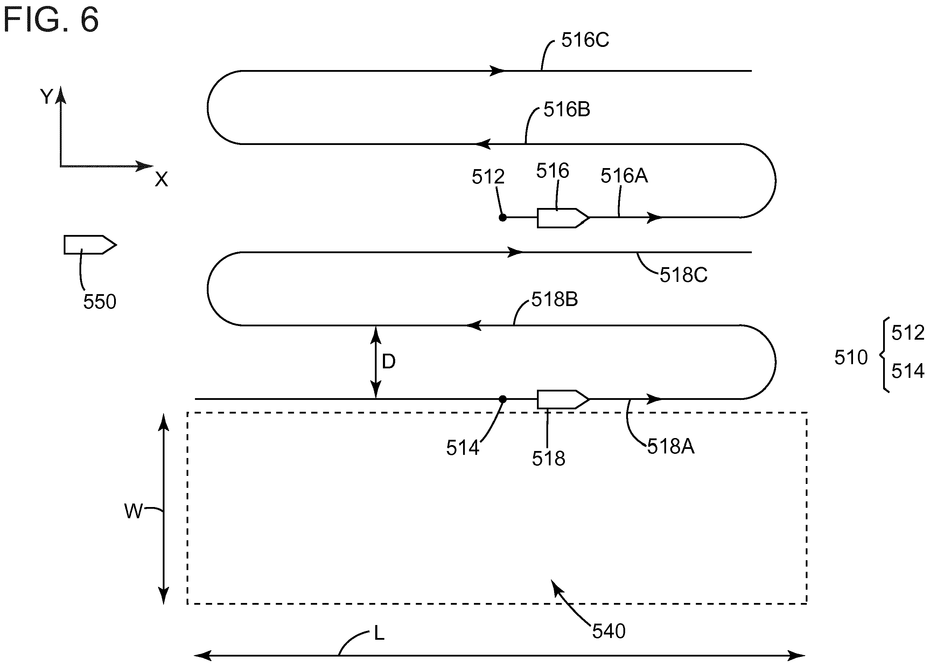

Sources 512 and 514 move along their travel paths 516A and 518A until they reach the end, after which, the sources and their towing vessels turn around and return on parallel travel paths 516B and 518B, followed by another turn and another pair of parallel travel paths 516C and 518C, as illustrated in Figure 6. A distance D between adjacent travel paths 516A and 516B for the same source, or paths 518A and 518B, may have a value in the range of 50 to 500 m. In one particular embodiment, the distance D is between 100 and 200 m, the width W of the receiver flotilla 540 is about 4 km and the length L of the receiver flotilla is about 10 km. Note that length L may be different.

While the sources are shooting and moving along their traveling paths, the AUVs of the receiver flotilla 540 may be stationary. In this stationary mode, the AUVs may use their propulsion system to maintain their position constant while the associated receivers record the seismic data. The control and command vessel 550 (described in the embodiment illustrated in Figure 3) may communicate via acoustic signals with the AUVs for providing them with their underwater position so that each AUV is capable of maintaining a constant underwater position. When sources 512 and 514 arrive at the end of their travel path and proceed to turn to follow a next travel path, one of vessels 516, 518 and/or 550 may instruct the AUVs to move along the cross-line direction Y, with a given distance d, so that the entire receiver flotilla moves to the new position to be ready for the sources when arriving on the next traveling paths. In one application, the distance d with which each AUV moves along cross-line direction Y when the sources turn is equal to distance D.

There is a second mode for recording the seismic data with the receiver flotilla and the source flotilla, which is called herein the drifting mode. In this mode, the AUVs drift as a swarm with the ocean currents (or due to their own propulsion system) along the cross-line direction Y while the sources advance along their traveling directions 516A and 518A so that the entire receiver flotilla 540 moves along the cross-line direction Y. In the case that the receivers drift only because of the ocean currents, the receivers may be carried by receiver carriers that do not have their own propulsion systems, e.g., buoys. Figure 6 is also illustrative of this mode.

The distance D between adjacent source paths discussed above may be calculated as a function of the width W and speed of the receiver flotilla. The value of 100 to 200 m discussed above has been estimated based on the assumption that the vessels towing the sources advance with a speed of about 10 km/h while the receivers drift or move with a speed of about 2 km/h.

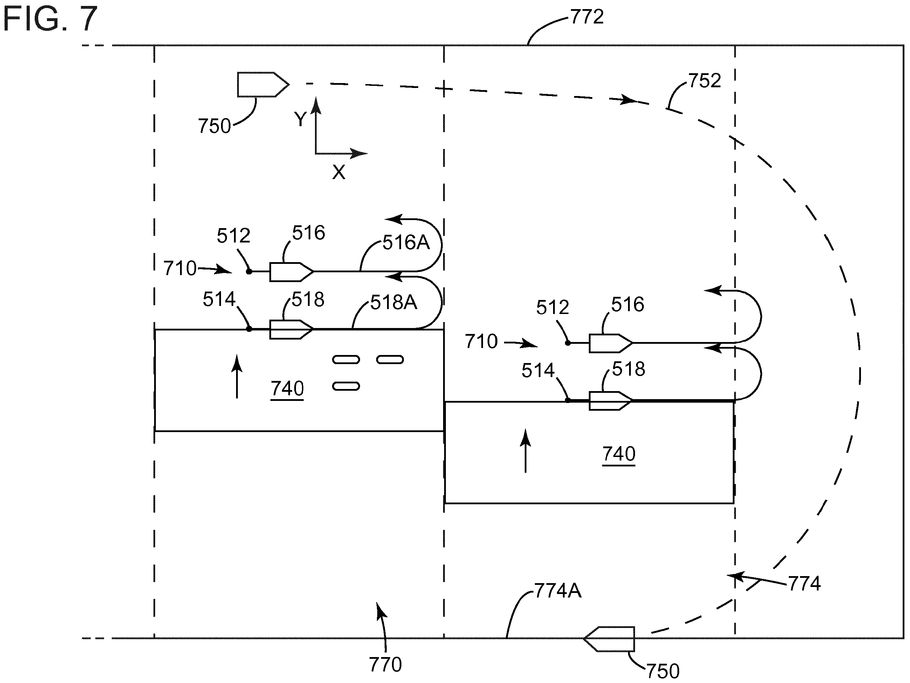

Figure 7 shows how the receiver flotilla 740 and the source flotilla 710 advance along the cross-line direction Y, with the sources 514 and 512 moving along the inline direction X from one end of the receiver flotilla 740 to the other end and then reversing direction until an entire slice 770 of the entire seismic survey area 772 is covered, i.e., the seismic data for this entire slice is acquired. At the end of slice 770, the support vessel 750 is collecting the receivers and following a path 752, arrives at a beginning end 774A of a next slice 774. The next slice 774 can be adjacent to the previous slice 770 or located somewhere else over the survey area 772. Source vessels 516 and 518 can travel by themselves to the beginning 774A of the new slice 774 or they can also be transported by the support vessel 750. Once at the new slice 774, the receiver flotilla 740 and the source flotilla 710 start collecting the seismic data as in the previous slice 770. For each slice, either the stationary mode or the drifting mode for moving the receiver flotilla may be employed.

While Figure 7 shows the receiver flotilla 740 to move in the same direction in both slices 770 and 774, it is possible to have the receiver flotilla 740 move in opposite directions in adjacent slices, so that the use of the support vessel 750 for transporting the receivers is not necessary.

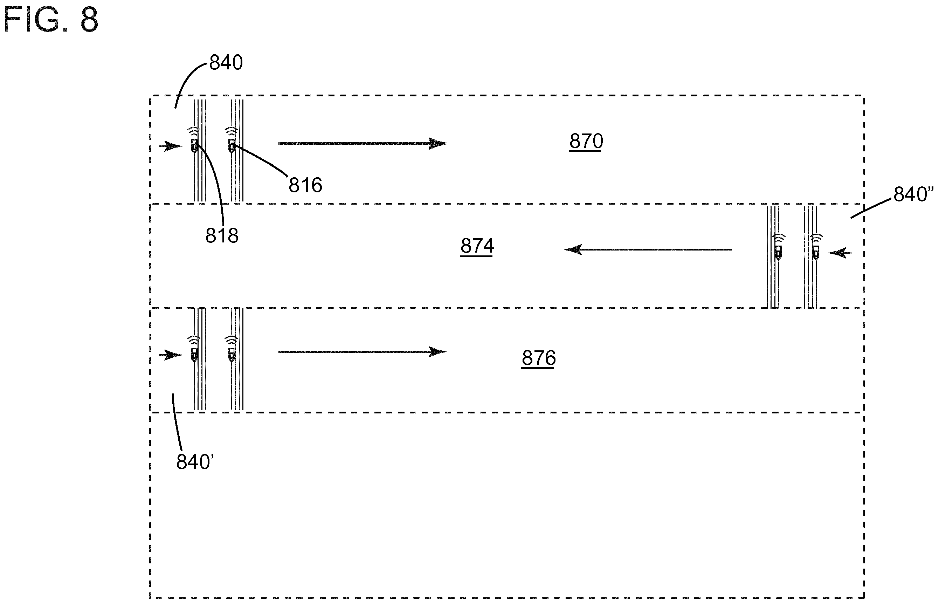

Figure 8 illustrates an embodiment in which plural receiver flotillas 840, 840' and 840" move at the same time along different slices 870, 876 and 874, respectively, in the same or different directions, for simultaneously collecting the seismic data. For simplicity, only vessels 816 and 818 are labeled for the source flotilla associated with the receiver flotilla 840.

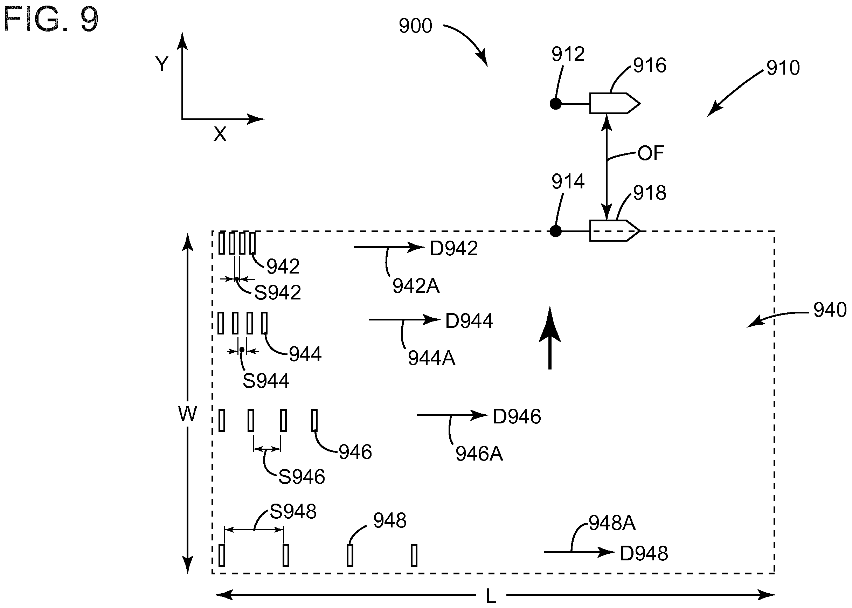

In still another embodiment, the density of the receivers of the receiver flotilla relative to their distribution area (e.g., area 560 in Figure 5A) varies with the offset distance relative to a source, as now discussed with regard to Figure 9. Acquisition system 900 includes a source flotilla 910 and a receiver flotilla 940. Source flotilla 910 includes at least two sources, one LF source 912 towed by a corresponding vessel 916 and an HF source 914 towed by a corresponding vessel 918. Vessel 918 advances along a side of the receiver flotilla 940 while vessel 916 advances, in parallel with vessel 918, but with an offset distance OF, along the cross-line direction Y relative to vessel 918 and away from the receiver flotilla 940.

Receiver flotilla 940 includes plural receivers 942, 944, 946 and 948 arranged along corresponding rows 942A, 944A, 946A, and 948A, respectively. Rows 942A, 944A, 946A, and 948A are parallel to each other and parallel to the inline direction X, along which the vessels advance. Receiver flotilla 940 includes at least two different rows 942A and 944A. A separation distance S942 between two adjacent receivers 942 is different from a separation distance S944 between two adjacent receivers 944 and different from a separation distance S946 between two adjacent receivers 946 and different from a separation distance S948 between two adjacent receivers 948. In other words, S942 may be about 50 m, S944 may be about 100 m, S946 may be about 200 m and S948 may be about 300. In one application, the separation distance between two adjacent receivers on two adjacent rows is different.

This means that a density of the receivers along a corresponding row is different between at least two rows. While Figure 9 shows the separation distance (or density) of each row being different from a next row, it is possible in one application that some rows share the same separation distance. Further, it is possible that the rows of the receiver flotilla 940 can have a different spatial distance along the cross-line direction as well. In other words, if the flotilla consists of just 4 rows as illustrated in Figure 9, the cross-line separation (along axis Y) between row 942A and row 944A is smaller than cross-line separation between row 944A and row 946A.

In another application, the depth of the different rows can vary, e.g., increasing as the row is further away from vessel 918. This means that a depth D942 of the first row 942A is different from a depth D944 of the second row 944A, which is different from a depth D946 of the third row 946A, which is different from a depth D948 of the fourth row 948A. In other words, at least two depths of different rows are different. In another application, each depth of a given row is different from a depth of another row. It is assumed that a depth of all receivers belonging to a same row is the same. For example, in one application, depth D942 is about 50 m, depth D944 is about 100, depth D946 is about 200 m and depth D948 is about 300 m.

In still another embodiment, the rows of the receiver flotilla 940 have different spatial distances along the inline direction and also different depths relative to the water surface and also different cross-line distances between the various rows. In other words, it is possible to have any possible arrangement for the receiver flotilla, i.e., rows having same spatial distances and depths and cross-line separation, rows having different spatial distances and same depths and cross-line separation, rows having same spatial distances and cross-line separation and different depths, rows having different cross-line separation and the same spatial distances and depths, and rows having different cross-line separation, different spatial distances, and different depths, and so on. For the last arrangement, it means that the receiver distribution is denser/shallower for near offsets and gradually sparser/deeper for longer offsets relative to vessel 918 or source 914.

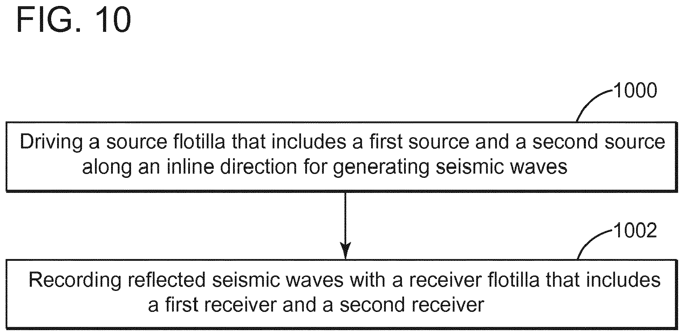

According to an embodiment illustrated in Figure 10, there is a method for seismic data acquisition that includes a step 1000 of driving a source flotilla, which includes a first source and a second source, along an inline direction for generating seismic waves, and a step 1002 of recording reflected seismic waves with a receiver flotilla, which includes a first receiver and a second receiver. The first source moves independent of the second source, the first receiver moves independent of the second receiver, and the first source and the second source move independent of the first receiver and the second receiver.

In one application, each of the first source, the second source, the first receiver, and the second receiver move independent of each other. In another application, the receiver flotilla drifts with the ocean currents along a cross-line direction while the first and second sources advance along an inline direction, which is perpendicular to the cross-line direction.

In one embodiment, the method may also include a step of maintaining the receiver flotilla stationary while the first and second sources advance along the inline direction as receiver carriers that carry the first and second receivers have propulsion systems that maintain constant their positions underwater. The method may also include a step of deploying, in addition to the first and second receivers, rows of receivers, a first row of receivers including first receivers being separated from each other by a first separation distance and a second row of receivers including second receivers being separated from each other by a second separation distance, which is different from the first separation distance. In another embodiment, the method includes a step of deploying, in addition to the first and second receivers, rows of receivers, a first row of receivers being located at a first depth below the water surface and a second row of receivers being located at a second depth, which is different from the first depth.

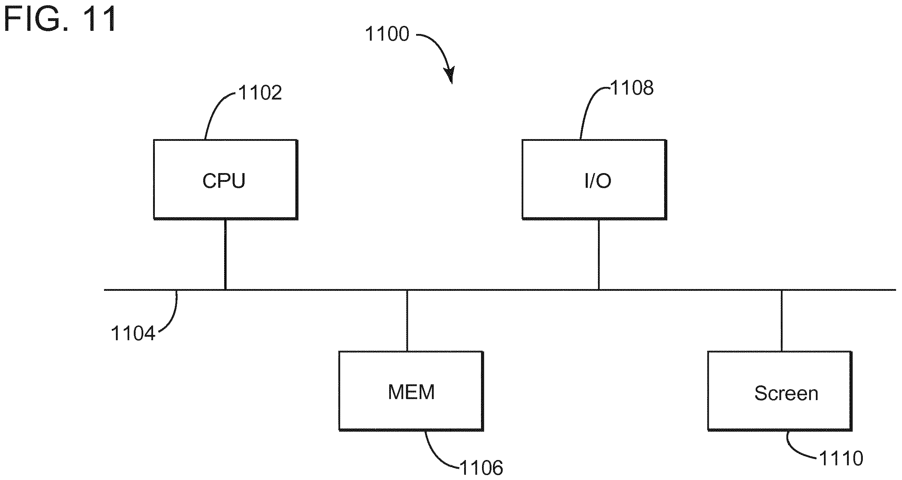

Various controllers have been discussed above. Such controllers may be implemented as illustrated in Figure 11. Computing device 1100 includes a processor 1102 that is connected through a bus 1104 to a storage device 1106. Computing device 1100 may also include an input/output interface 1108 through which data can be exchanged with the processor and/or storage device. For example, a keyboard, mouse or other device may be connected to the input/output interface 1108 to send commands to the processor and/or to collect data stored in the storage device or to provide data necessary to the processor. Alternatively, input/output interface 1108 may communicate with a transceiver for receiving instructions from another device, e.g., command and control module. Results of this or another algorithm may be visualized on a screen 1110, which is attached to controller 1100.

The disclosed embodiments provide a system and a method for acquiring seismic data with a source flotilla and a receiver flotilla. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A seismic acquisition system (300) comprising:
a source flotilla (310) that includes a first source (312) and a second source (314) for generating seismic waves; and
a receiver flotilla (340) that includes a first receiver (342) and a second receiver (344) for recording reflected seismic waves,
wherein the first source (312) moves independent of the second source (314),
the first receiver (342) moves independent of the second receiver (344), and
the first source (312) and the second source (314) move independent of the first receiver (342) and the second receiver (344).

2. The system of Claim 1, wherein each of the first source, the second source, the first receiver, and the second receiver move independent of each other.

3. The system of Claim 1, further comprising:
a first vessel (316) that tows the first source;
a second vessel (318) that tows the second source;
a first autonomous underwater vehicle (AUV) (346) that carries the first receiver; and
a second AUV (348) that carries the second receiver.

4. The system of Claim 1, wherein the first source emits seismic waves in a low-frequency spectrum and the second source emits seismic waves in a high-frequency spectrum.

5. The system of Claim 4, wherein the receiver flotilla is shaped as a rectangle and the second source advances on a long side of the rectangle and the first source advances at an offset distance OF from the rectangle.

6. The system of Claim 5, wherein a width W of the rectangle is equal in size to the offset distance OF.

7. The system of Claim 1, wherein the receiver flotilla drifts with ocean currents along a cross-line direction while the first and second sources advance along an inline direction, which is perpendicular to the cross-line direction.

8. The system of Claim 1, wherein the receiver flotilla is stationary while the first and second sources advance along an inline direction as receiver carriers that carry the first and second receivers have propulsion systems that maintain constant the receiver positions underwater.

9. The system of Claim 1, wherein the receiver flotilla includes, in addition to the first and second receivers, a first row of receivers including receivers being separated from each other with a first separation distance and a second row of receivers including receivers being separated from each other with a second separation distance, which is different from the first separation distance.

10. The system of Claim 9, wherein a separation distance between adjacent receivers of a given row of receivers is increasing as the row of receivers is further away from the first vessel.

11. The system of Claim 1, wherein the receiver flotilla includes, in addition to the first and second receivers, a first row of receivers including receivers located at a first depth below the water surface and a second row of receivers including receivers located at a second depth, which is different from the first depth.

12. The system of Claim 1, wherein the receiver flotilla includes, in addition to the first and second receivers, rows of receivers, each row of receivers having (1) a separation distance between adjacent receivers and (2) a depth, and the separation distance and the depth increasing as the row of receivers is further apart from the first vessel.

13. A method for seismic data acquisition, the method comprising:
driving (1000) a source flotilla (310), that includes a first source (312) and a second source (314), along an inline direction for generating seismic waves; and
recording (1002) reflected seismic waves with a receiver flotilla (340) that includes a first receiver (342) and a second receiver (344),
wherein the first source (312) moves independent of the second source (314),
the first receiver (342) moves independent of the second receiver (344), and
the first source (312) and the second source (314) move independent of the first receiver (342) and the second receiver (344).

14. The method of Claim 13, wherein each of the first source, the second source, the first receiver, and the second receiver moves independent of each other.

15. The method of Claim 13, wherein the receiver flotilla drifts with ocean currents along a cross-line direction while the first and second sources advance along an inline direction, which is perpendicular to the cross-line direction.
